# EUROPÄISCHE PATENTSCHRIFT

(11) **EP 3 933 884 B1**
(45) Veröffentlichungstag und Bekanntmachung des Hinweises auf die Patenterteilung: **14.05.2025**
(21) Anmeldenummer: 21180224.4
(22) Anmeldetag: 18.06.2021
(51) Int. Cl.: H01J 49/10, H05H 1/46, H02M 7/48

(54) **GENERATOR FÜR DIE SPEKTROMETRIE**
SPECTROMETRIC GENERATOR
GÉNÉRATEUR POUR LA SPECTROMÉTRIE

(30) Priorität: 01.07.2020 DE 102020117402
(43) Veröffentlichungstag der Anmeldung: 05.01.2022
(73) Patentinhaber: Analytik Jena GmbH+Co. KG, 07745 Jena (DE)
(72) Erfinder: Claus, Frank, 07751 Bucha (DE); Bielert, Andreas, 07407 Rudolstadt (DE)
(74) Vertreter: Endress + Hauser Group Services (Deutschland) AG+Co. KG

(56) Entgegenhaltungen:
- EP-A2- 2 020 672
- US-A1- 2013 265 810
- US-A1- 2016 066 405

## Beschreibung

Die vorliegende Erfindung betrifft einen HF-Plasmagenerator zur Erzeugung eines induktiv gekoppelten Plasmas in der Spektrometrie mit den Merkmalen des Oberbegriffs des ersten Anspruchs und ein Spektrometer mit einem erfindungsgemäßen HF-Plasmagenerator.

Induktiv gekoppelte Plasmen finden im Bereich der Spektroskopie vielfach Anwendung, beispielsweise zur Erzeugung von Ionen in der Massenspektroskopie oder zur Erzeugung eines Spektrums in der optischen Emissionsspektroskopie.

Aus dem Stand der Technik sind unterschiedlichste HF-Plasmageneratoren zur Erzeugung eines induktiv gekoppelten Plasmas bekannt geworden, wie beispielsweise freilaufende oder frequenzstabilisierte Generatoren, sowie Generatoren, welche auf Hochleistungsröhren basieren und solche, die Halbleiter verwenden. Grundsätzlich umfasst ein Plasmagenerator typischerweise eine Spannungsversorgungseinrichtung und eine Oszillatorschaltung, welche mit einer Lastschaltung zur Erzeugung des Plasmas gekoppelt ist. Bei den Oszillatorschaltungen handelt es sich beispielsweise um Schaltungen nach Colpitts, Meißner oder Huth-Kühn. Aber auch die Verwendung von Halbrücken- oder Vollbrückenschaltungen sind bekannt geworden. So ist aus der WO2007/134363A1 ein auf dem Prinzip einer Vollbrückenschaltung basierender HF-Generator für die Spektroskopie bekannt geworden, bei welchem Halbleiter-Schaltelemente zum Einsatz kommen.

Eine Einrichtung zur Erzeugung eines induktiv gekoppelten Plasmas umfasst ferner eine oder mehrere Induktionsspulen, welche koaxial zu einem Brenner angeordnet sind, in welchen ein Gas, häufig Argon-Gas, eingeleitet und dort erhitzt wird. Mittels eines Hochfrequenzgenerators (HF-Generator) wird in den Spulen ein starkes elektromagnetisches Wechselfeld erzeugt, welches das Plasma durch induktive Kopplung mit der benötigten Energie versorgt. Typische Temperaturen des Plasmas liegen im Bereich von 3000 K bis 10000 K. Frequenzen zur Erzeugung der magnetischen Wechselfelder wiederum liegen im Bereich von MHz bis GHz, häufig im Bereich zwischen 10 MHz und 50 MHz. Grundsätzlich müssen die HF-Plasmageneratoren dazu in der Lage sein, ausreichend Leistung zur Erzeugung und Aufrechterhaltung des Plasmas zur Verfügung zu stellen. So liegt die Leistung typischerweise im Bereich von 500 W bis 3 kW. Außerdem sind ein hoher Wirkungsgrad bzw. eine hohe Güte wünschenswert.

Die US 2013/265810 A1 offenbart eine Hochfrequenz-Energieversorgungsvorrichtung zur Versorgung einer Last, deren Impedanz stark schwankt, mit Hochfrequenz-Energie, wobei ein stabiler Hochfrequenzstrom aufrechterhalten wird, ohne dass ein Überstrom oder eine Überspannung in einer Treiberschaltung erzeugt wird. Eine ähnliche Vorrichtung lässt sich der US 2016/066405 A1 oder der WO 2007/134363 A1 entnehmen. Einen Hochfrequenzgenerator, der eine Einstellung einer Plasmaschwingfrequenz vorsieht, offenbart die EP 2 020 672 A2.

Ebenfalls von großer Wichtigkeit ist die Plasmaform, welche unter anderem von den jeweils vorherrschenden Potentialen in der Nähe des Plasmas, beispielsweise eines Konus des jeweiligen Spektrometers, von der Form und mechanischen Ausgestaltung der verwendeten Induktionsspule, und verschiedensten Eigenschaften der verwendeten Bauteile abhängt. Um die Form des Plasmas, insbesondere des Plasmakerns, gezielt zu beeinflussen, gilt es beispielsweise, vorherrschende elektrische Potentialverschiebungen in ein analytisches Optimum zu bringen. In diesem Zusammenhang wurden zwar unterschiedliche Schaltungskonzepte beschrieben, die zwar Bedingungen für eine analytisch optimale Ausformung des Plasmas umsetzen, die jedoch in der Regel statisch sind und sich nicht automatisch auf veränderliche Verhältnisse einstellen lassen. So ist typischerweise auch eine aufwändige Anpassung der verwendeten Bauteile sowie der Geometrie der Plasmaspule notwendig, um eine optimale Plasmaformung zu erreichen. Entsprechend stellt jeder Plasmagenerator ein Unikat dar, dessen Fertigungsprozess aufwendig und teuer ist. Eine Serienfertigung von Plasmageneratoren, die die Erzeugung eines analytisch optimal ausgeformten Plasmas ermöglichen, ist dagegen nur sehr schwer realisierbar.

Hiervon ausgehend liegt der vorliegenden Erfindung die Aufgabe zugrunde, eine Plasmagenerator bereitzustellen, mit welchem sich auf einfache Art und Weise ein optimal ausgeformtes Plasma erzeugen lässt.

Diese Aufgabe wird gelöst durch den HF-Plasmagenerator mit den Merkmalen des ersten Anspruchs .

Zudem kann der Plasmagenerator in einer möglichen Ausgestaltung eine Recheneinheit zur Steuerung der steuerbaren Spannungsquelle umfassen.

Die Bereitstellung einer steuerbaren Spannungsquelle erlaubt eine Formung des Plasmas, insbesondere des Plasmakerns, im fortlaufenden Betrieb des HF-Plasmagenerators. Durch eine gezielte Variation der an der Lastschaltung anliegenden Spannung und/oder zumindest einer Potentialdifferenz zwischen der Induktionsspule und einem Konus eines Spektrometers kann das Plasma, insbesondere der Plasmakern gezielt gestaucht oder gestreckt werden, oder auch eine Entfernung zu einem Konus des Spektrometers verändert werden. Auf diese Weise kann demnach die Plasmaform fortlaufend optimiert und beispielsweise hinsichtlich des analytischen Optimums korrigiert werden. Dies ermöglicht eine steuerbare Bündelung des jeweils erzeugten Ionenstrahls.

Es ist ein Vorteil der vorliegenden Erfindung, dass eine Verformung des Plasmas mit einem erfindungsgemäßen Plasmagenerator ohne bauteiltechnische Eingriffe in den Generator möglich ist. Durch diese elektronische Justiermöglichkeit können Kosten und Dauer der Fertigung des jeweiligen Generators deutlich reduziert werden, sowie die analytische Leistung des jeweiligen Geräts im fortlaufenden Betrieb optimiert werden.

In einer Ausgestaltung umfasst die Oszillatorschaltung des HF-Plasmagenerators eine Brückenschaltung, insbesondere eine Halbrückenschaltung oder eine Vollbrückenschaltung.

In dieser Hinsicht ist es von Vorteil, wenn es sich bei der Brückenschaltung um eine Vollbrückenschaltung mit vier Transistoren, welche in vier Zweigen angeordnet sind, handelt, wobei jeder der Transistoren eine Gate-Elektrode aufweist, über welche er mit einer Gate-Steuerspannung beaufschlagbar ist, und wobei die Transistoren alternierend geschaltet werden, um die HF-Leistung zu erzeugen.

Es ist ferner von Vorteil, wenn der HF-Plasmagenerator eine Gate-Steuerschaltung zum Erzeugen der Gate-Steuerspannung zum Schalten der Transistoren umfasst.

Schließlich ist es hinsichtlich der Gate-Steuerschaltung von Vorteil, wenn diese dazu ausgestaltet ist, einen vorgebbaren Wert einer Plasma-Schwingfrequenz eines Lastenschwingkreises einzustellen. Bevorzugt kann die Gate-Steuerschaltung die Plasma-Schwingfrequenz anhand des zeitlichen Verlaufs der Gate-Steuerspannung einstellen, beispielsweise kann es sich bei der Gate-Steuerspannung um ein zeitlich periodisches Signal, insbesondere um ein Rechtecksignal, handeln, mittels welchem die Transistoren auf geeignete Art und Weise ein- und ausgeschaltet werden können. Eine derartige gezielte Steuerung der Gate-Steuerspannung erlaubt vorteilhaft sowohl eine Kompensation variierender Plasmalasten als auch die Kompensation von spezifischen Bauteileigenschaften. Es kann also mittels des erfindungsgemäßen HF-Plasmagenerators auf einfache Weise ein zuverlässiges, analytisch verwertbares Plasma bereitgestellt werden. In diesem Zusammenhang sei auf die deutsche Patentanmeldung mit dem Aktenzeichen DE 10 2020 106 692.9 verwiesen.

In einer erfindungsgemäßen Variante umfasst der HF-Plasmagenerator zumindest zwei steuerbare Spannungsquellen, welche in zwei unterschiedlichen Zweigen der Oszillatorschaltung angeordnet sind.

In der anderen erfindungsgemäßen Variante umfasst der HF-Plasmagenerators zumindest vier steuerbare Spannungsquellen, welche in vier unterschiedlichen Zweigen der Oszillatorschaltung angeordnet sind. Diese Variante ist besonders vorteilhaft in Zusammenhang mit einer in Form einer Vollbrückenschaltung ausgestalteten Oszillatorschaltung. In diesem Falle ergibt sich eine gezielte Einstellmöglichkeit der Potentiale in allen vier Quadranten.

Die Verwendung mehrerer, insbesondere baugleicher, steuerbarer Spannungsquellen erlaubt eine gezielte Einstellung der an der Lastschaltung anliegenden Spannung und/oder zumindest einer Potentialdifferenz zwischen der Induktionsspule und einem Konus des Spektrometers.

Die der Erfindung zugrundeliegende Aufgabe wird ferner gelöst durch ein Spektrometer umfassend einen erfindungsgemäßen HF-Plasmagenerator nach zumindest einer der beschriebenen Ausgestaltungen.

Es ist dabei von Vorteil, wenn es sich bei dem Spektrometer um ein Massenspektrometer oder um ein optisches Emissionsspektrometer handelt.

Es sei darauf verwiesen, dass sich die in Zusammenhang mit dem erfindungsgemäßen HF-Plasmagenerator beschriebenen Ausgestaltungen mutatis mutandis auch auf das erfindungsgemäße Spektrometer anwenden lassen und umgekehrt.

Nähere Einzelheiten der Erfindung werden anhand der nachfolgenden Figuren erläutert. Es zeigt:
- Fig. 1: eine schematische Darstellung eines HF-Plasmagenerators mit einer steuerbaren Spannungsquelle,
- Fig. 2: eine schematische Illustration zur Wirkweise der steuerbaren Spannungsquelle,
- Fig. 3: ein Schaltbild einer erfindungsgemäßen Oszillatorschaltung in Form einer Vollbrückenschaltung mit vier Transistoren und zusätzlichen induktiven Elementen, und
- Fig. 4: ein Schaltbild einer erfindungsgemäßen Oszillatorschaltung gemäß Fig. 3 sowie mit vier steuerbaren Spannungsquellen.

Gleiche Elemente werden in den Figuren mit demselben Bezugszeichen versehen.

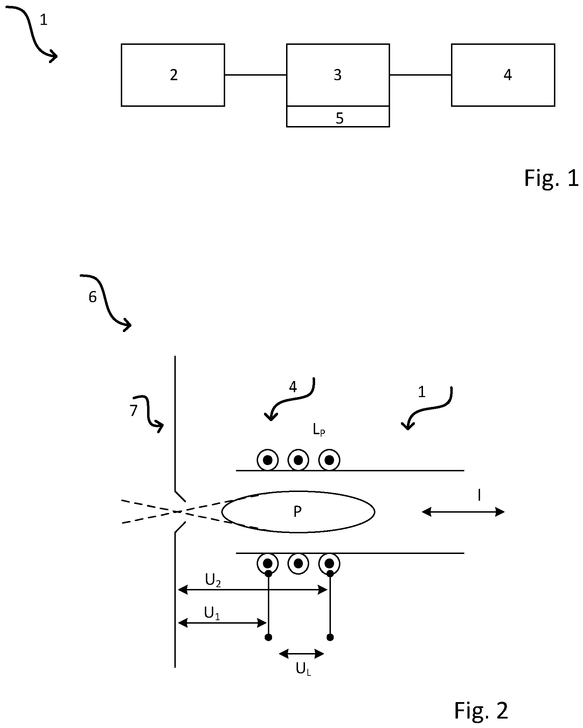

In Fig. 1 ist ein schematisches Blockschaltbild eines HF-Plasmagenerators 1 gezeigt. Der Generator 1 umfasst eine Spannungsversorgungseinrichtung 2 in Form einer Gleichspannungsquelle, mittels welcher die Oszillatorschaltung 3 versorgt wird. Mittels der Oszillatorschaltung 3 wird die benötigte Hochfrequenzleistung erzeugt. Die Oszillatorschaltung 3 ist entsprechend mit der Lastschaltung 4 zum Erzeugen des Plasmas gekoppelt, welche die hier nicht separat gezeigte Induktionsspule L_{P} und eine zur Induktionsspule parallel geschaltete Kapazität C_{P} aufweist.

Der HF-Plasmagenerator 1, insbesondere die Spannungsversorgungseinrichtung 2, umfasst ferner eine steuerbare Spannungsquelle 5, welche in einem Zweig der Oszillatorschaltung 3 angeordnet ist, und welche dazu ausgestaltet ist, eine an der Lastschaltung 4 anliegende Spannung und/oder zumindest eine Potentialdifferenz zwischen der hier nicht gezeigten Induktionsspule und einem ebenfalls nicht dargestellten Spektrometer, insbesondere einem Konus des Spektrometers, einzustellen.

In Fig. 2 ist die Wirkungsweise der steuerbaren Spannungsquelle 5 schematisch dargestellt. Die Form des jeweils erzeugten Plasmas P, insbesondere des hier dargestellten Plasmakerns, hängt unter anderem entscheidend von den Potentialen U₁, U₂ zwischen der Plasmaspule L_{P} und dem Konus 7, beispielsweise einem Sampler, eines Spektrometers 6, mit welchem der Plasma-Generator 1 verwendbar ist, sowie von der an der Lastschaltung 4 anliegenden Spannung U_{L}, ab. Durch eine gezielte Einstellung einer oder mehrerer dieser Potentiale lässt sich demnach die Plasmaform gezielt beeinflussen. Insbesondere ist sogar eine dynamische Anpassung der Plasmaform im fortlaufenden Betrieb möglich.

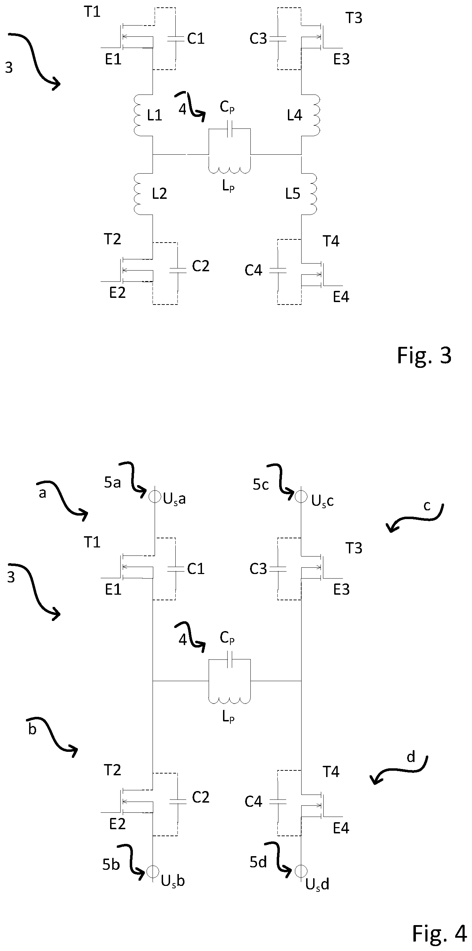

Eine exemplarische Ausgestaltung für eine Oszillatorschaltung 3 ist in Fig. 3 dargestellt. Die Oszillatorschaltung 3 umfasst eine Vollbrückenschaltung aus vier Transistoren T1-T4, wobei jeder der Transistoren eine Gate-Elektrode E1-E4 aufweist, über welche er mit einer Gate-Steuerspannung U_{G} beaufschlagbar ist. Zum Erzeugen der HF-Leistung für den Lastkreis 4 mit der Induktionsspule L_{P} und der Kapazität C_{P} werden die Transistoren T1-T4 alternierend geschaltet. Zu jedem der Transistoren T1-T4 ist optional ein induktives Element L1-L4 in Reihe geschaltet. Die induktiven Elemente L1-L4 bilden dann mit den Ausgangskapazitäten C1-C4 der Transistoren T1-T4 jeweils einen Reihenschwingkreis aus.

Fig. 4 zeigt beispielhaft eine bevorzugte Variante der vorliegenden Erfindung, bei welcher vier steuerbare Spannungsquellen 5a-5d verwenden. Dies kann beispielsweise dann von Vorteil sein, wenn eine als Vollbrückenschaltung ausgestalte Oszillatorschaltung 3 zum Einsatz kommt. Die hier gezeigte Oszillatorschaltung 3 ist ähnlich wie die in Fig. 3 gezeigte ausgebildet. Jeder der vier Zweige a,b,c,d umfasst einen Transistor T1-T4 sowie eine steuerbare Spannungsquelle 5a-5d zur Erzeugung, mittels welcher die Spannungen Uₛa-Uₛd erzeugbar sind. Optional wäre es auch für den Fall der Fig. 4 denkbar, zusätzliche, in Reihe geschaltete Induktivitäten L1-L4 zu verwenden, wie im Falle der Fig. 3.

Mittels der gesteuerten Spannungsquellen 5a-5d bzw. mittels der Spannungen Uₛa-Uₛd können die Potentiale U₁, U₂ zwischen der Plasmaspule L_{P} und dem Konus 7, sowie die an der Lastschaltung 4 anliegenden Spannung U_{L} variiert werden. Dadurch wiederum kann die Plasmaform, insb. der Plasmakern gezielt beeinflusst, beispielsweise parallel und/oder senkrecht zu einer Längsachse I (vgl. Fig. 2) durch die Spule L_{P} gestreckt oder gestaucht, werden. Dies alles kann ohne eine Veränderung der weiteren verwendeten Bauteile und ohne eine Änderung der Spulengeometrie erfolgen. Zudem kann eine Entfernung des Plasmakerns zum Konus 7 des Spektrometers 6 passend eingestellt werden. Insgesamt ist somit auch die Bündelung des entstehenden Ionenstrahls anhand der Spannungsquellen 5a-5d gezielt steuerbar.

In anderen Ausgestaltungen können auch andere Anzahlen von steuerbaren Spannungsquellen 5 vorgesehen sein. Es ist vorteilhaft, jedoch keineswegs zwingend notwendig, wenn die Anzahl an Zweigen der Oszillatorschaltung 3 der Anzahl der verwendeten steuerbaren Spannungsquellen 5 entspricht.

### Bezugszeichen

- 1: HF-Plasmagenerator
- 2: Spannungsversorgungseinrichtung
- 3: Oszillatorschaltung
- 4: Lastschaltung
- 5,5a-5d: Steuerbare Spannungsquelle
- 6: Spektrometer
- 7: Konus
- T1-T4: Transistoren
- E1-E4: Gate-Elektroden
- L_{P}: Induktionsspule
- C_{P}: Kapazität
- L1-L4: Induktive Elemente
- C1-C4: Ausgangskapazitäten
- Uₛa-Uₛd: Spannungen der steuerbaren Spannungsquellen
- U₁, U₂: Potentiale zwischen Induktionsspule und Konus
- P: Plasma, Plasmakern
- L: Längsachse

## Patentansprüche

1. HF-Plasmagenerator (1) zur Erzeugung eines induktiv gekoppelten Plasmas (P) in der Spektrometrie, umfassend
eine Spannungsversorgungseinrichtung (2) mit einer Gleichspannungsquelle, eine an die Spannungsversorgungseinrichtung (2) angeschlossene Oszillatorschaltung (3) zum Erzeugen von HF-Leistung, und
eine mit der Oszillatorschaltung (3) gekoppelte Lastschaltung (4) zum Erzeugen des Plasmas (P), welche Lastschaltung (4) zumindest eine Induktionsspule (L_{P}) und eine zur Induktionsspule (L_{P}) parallel geschaltete Kapazität (Cp) aufweist,
**dadurch gekennzeichnet,**
**dass** die Spannungsversorgungseinrichtung (2) ferner zwei steuerbare Spannungsquellen (5) oder vier steuerbare Spannungsquellen (5a-5d) umfasst, welche in zwei unterschiedlichen Zweigen bzw. vier unterschiedlichen Zweigen (a-d) der Oszillatorschaltung (3) angeordnet sind, und
**dass** die steuerbare Spannungsquellen (5, 5a-5d) dazu ausgestaltet sind, eine an der Lastschaltung (4) anliegende Spannung (U_{L}) und/oder zumindest eine Potentialdifferenz (U₁,U₂) zwischen der Induktionsspule (L_{P}) und einem Spektrometer (6) einzustellen.

2. HF-Plasmagenerator (1) nach Anspruch 1,
wobei die Oszillatorschaltung (3) eine Brückenschaltung umfasst,
wobei es sich bei der Brückenschaltung um eine Vollbrückenschaltung mit vier Transistoren (T1-T4), welche in vier Zweigen (a-d) der Oszillatorschaltung (3) angeordnet sind, handelt,
wobei jeder der Transistoren (T1-T4) eine Gate-Elektrode (E1-E4) aufweist, über welche der Transistor (T1-T4) mit einer Gate-Steuerspannung beaufschlagbar ist, und
wobei die Transistoren (T1-T4) alternierend geschaltet werden, um die HF-Leistung zu erzeugen.

3. HF-Plasmagenerator (1) nach Anspruch 2,
umfassend eine Gate-Steuerschaltung zum Erzeugen der Gate-Steuerspannung zum Schalten der Transistoren (T1-T4).

4. HF-Plasmagenerator (1) nach Anspruch 3,
wobei die Gate-Steuerschaltung dazu ausgestaltet ist, einen vorgebbaren Wert einer Plasma-Schwingfrequenz eines Lastenschwingkreises einzustellen.

5. Spektrometer (6) umfassend einen HF-Plasmagenerator (1) nach zumindest einem der Ansprüche 1 bis 4.

6. Spektrometer (6) nach Anspruch 5,
wobei es sich bei dem Spektrometer (6) um ein Massenspektrometer oder um ein optisches Emissionsspektrometer handelt.

## Claims

1. RF plasma generator (1) for generating an inductively coupled plasma (P) in spectrometry, comprising
a power supply (2) with a DC voltage source,
an oscillator circuit (3) connected to the power supply (2) for generating RF power, and
a load circuit (4) coupled to the oscillator circuit (3) for generating the plasma (P), which load circuit (4) comprises at least an inductor (L_{P}) and a capacitor (C_{P}) connected in parallel to the inductor (L_{P}),
**characterized in**
**that** the voltage supply device (2) further comprises two controllable voltage sources (5) or four controllable voltage sources (5a-5d), which are arranged in two different branches or four different branches (a-d) of the oscillator circuit (3), and
**that** the controllable voltage sources (5, 5a-5d) are configured to adjust a voltage (U_{L}) present at the load circuit (4) and/or at least one potential difference (U₁, U₂) between the induction coil (L_{P}) and a spectrometer (6).

2. RF plasma generator (1) according to Claim 1,
the oscillator circuit (3) comprising a bridge circuit,
the bridge circuit being a full bridge circuit with four transistors (T1-T4) which are arranged in four branches (a-d) of the oscillator circuit (3),
each of the transistors (T1-T4) having a gate electrode (E1-E4) via which the transistor (T1-T4) can be supplied with a gate control voltage, and
the transistors (T1-T4) being connected alternately in order to generate the RF power.

3. RF plasma generator (1) according to claim 2,
comprising a gate control circuit for generating the gate control voltage for switching the transistors (T1-T4).

4. RF plasma generator (1) according to claim 3,
the gate control circuit being designed to set a predeterminable value of a plasma oscillation frequency of a load oscillating circuit.

5. Spectrometer (6) comprising an RF plasma generator (1) according to at least one of claims 1 to 4.

6. Spectrometer (6) according to claim 5,
the spectrometer (6) being a mass spectrometer or an optical emission spectrometer.

## Revendications

1. Générateur de plasma HF (1) pour la production d'un plasma (P) couplé par induction en spectrométrie, comprenant
un dispositif d'alimentation en tension (2) avec une source de tension continue,
un circuit oscillateur (3) raccordé au dispositif d'alimentation en tension (2) pour la production de puissance HF, et
un circuit de charge (4) couplé au circuit oscillateur (3) pour générer le plasma (P), lequel circuit de charge (4) comporte au moins une bobine d'induction (L_{P}) et une capacité (C_{P}) montée en parallèle avec la bobine d'induction (L_{P}),
**caractérisé en ce**
**que** le dispositif d'alimentation en tension (2) comprend en outre deux sources de tension commandables (5) ou quatre sources de tension commandables (5a-5d), qui sont disposées dans deux branches différentes ou quatre branches différentes (a-d) du circuit oscillateur (3), et
**que** les sources de tension contrôlables (5, 5a-5d) sont conçues pour régler une tension (U_{L}) appliquée au circuit de charge (4) et/ou au moins une différence de potentiel (U₁, U₂) entre la bobine d'induction (L_{P}) et un spectromètre (6).

2. Générateur de plasma HF (1) selon la revendication 1,
le circuit oscillateur (3) comprenant un circuit en pont,
le circuit en pont étant un circuit en pont complet avec quatre transistors (T1-T4) qui sont disposés dans quatre branches (a-d) du circuit oscillateur (3),
chacun des transistors (T1-T4) comportant une électrode de grille (E1-E4) par laquelle le transistor (T1-T4) peut être alimenté avec une tension de commande de grille, et
les transistors (T1-T4) étant commutés en alternance pour générer la puissance HF.

3. Générateur de plasma HF (1) selon la revendication 2,
comprenant un circuit de commande de grille pour générer la tension de commande de grille afin de commuter les transistors (T1-T4).

4. Générateur de plasma HF (1) selon la revendication 3,
le circuit de commande de grille étant conçu pour régler une valeur prédéfinie de la fréquence d'oscillation du plasma d'un circuit oscillant de charge.

5. Spectromètre (6) comprenant un générateur de plasma HF (1) selon au moins l'une des revendications 1 à 4.

6. Spectromètre (6) selon la revendication 5,
le spectromètre (6) étant un spectromètre de masse ou un spectromètre d'émission optique.
